# EUROPEAN PATENT SPECIFICATION

(11) **EP 3 399 634 B1**
(45) Date of publication and mention of the grant of the patent: **10.05.2023**
(21) Application number: 16882022.3
(22) Date of filing: 21.12.2016
(51) Int. Cl.: H02M 3/335, H02M 1/44, H02M 1/08, H02M 1/00, H02J 7/00

(54) **ISOLATED BIDIRECTIONAL DC-DC CONVERTER**
ISOLIERTER BIDIREKTIONALER GLEICHSPANNUNGSWANDLER
CONVERTISSEUR CC-CC BIDIRECTIONNEL ISOLÉ

(30) Priority: 31.12.2015 KR 20150190661
(43) Date of publication of application: 07.11.2018
(73) Proprietor: Hyosung Heavy Industries Corporation, Seoul 04144 (KR)
(72) Inventor: JEONG, Byung Hwan, Gwacheon-si Gyeonggi-do 13835 (KR); LEE, Jeong Min, Seoul 08832 (KR)
(74) Representative: Viering, Jentschura & Partner mbB Patent- und Rechtsanwälte
(86) International application number: PCT/KR2016/015066
(87) International publication number: WO 2017/116070

(56) References cited:
- JP-A- 2007 043 822
- KR-A- 20060 134 399
- KR-A- 20080 093 177
- KR-A- 20080 093 177
- US-A1- 2011 249 472
- US-A1- 2013 222 951
- US-A1- 2013 222 951
- BYEN, BYENG-JOO ET AL.: 'A High-Efficiency Variable Modulation Strategy for a Dual-Active-Bridge Converter with a Wide Operating Range' 2015 9TH INTERNATIONAL CONFERENCE ON POWER ELECTRONICS-ECCE ASIA(ICPE-ECCE ASIA), [Online] 01 June 2015 - 06 June 2015, pages 240 - 545, XP055395478 Retrieved from the Internet: <URL:DOI: 10.1109/ICPE.2015.7167793>

## Description

### Technical Field

The present invention relates to an isolated bidirectional DC-DC converter. More particularly, the present invention relates to an isolated bidirectional DC-DC converter that enables highly efficient control by using different switching schemes interchangeably depending on a type of load in the bidirectional DC-DC converter applied between a DC grid system and a battery.

### Background Art

Recently, power consumption patterns are changing from AC power to DC power due to increase in digital loads, electric vehicles, etc. Also, there is growing interest in a DC grid system that is capable of maximizing effects of solar power, wind power, and energy storage system (ESS) distributed power.

When the DC grid system is connected to a distributed power system, the energy storage system (ESS) may be used to store surplus energy generated from renewable energy, such as solar power, wind power, etc. Also, it may be used as a reference DC power supply if a DC distribution system is unstable or power failure occurs, such that degradation of reliability and of stability may be reduced even though there is a problem in power supply.

Therefore, bidirectional DC-DC converters are widely used to connect the DC grid system and the ESS (or a battery). Generally, the bidirectional DC-DC converters are classified into a non-isolated type and an isolated type according to a type of isolation. Isolated bidirectional DC-DC converters are mainly used for system stability.

* In the case of a bidirectional DC-DC converter in which a phase-shifted ZVS converter and an isolated boost converter are combined, which is the most widely studied bidirectional DC-DC converter in recent years among the isolated bidirectional DC-DC converters, a leakage inductor constituent is used at the primary side of the transformer and a high-capacity inductor is used at the output side.

The bidirectional DC-DC converter operates in the same manner as the phase-shifted ZVS converter during forward operation of the transformer when power flows from the primary side to the secondary side of the transformer, and operates in the same manner as the boost converter during backward operation thereof.

However, when applying the bidirectional DC-DC converter with the above-described form to a light load, zero voltage switching (ZVS) is not performed, and in the case of backward operation, large spikes occur in the switch due to the difference in energy stored in the inductor at the output side and in the leakage inductor at the primary side of the transformer.

In order to solve the problem, Korean Patent No. 10-1338147 discloses a bidirectional DC-DC converter operating in the form of an LLC resonant converter or a dual active band (DAB) converter depending on the characteristics of the load connected to the DC-DC converter or on the direction of power flow, whereby optimum efficiency and output control may be provided regardless of the type of load connected to the primary side or the secondary side.

However, in the bidirectional DC-DC converter disclosed in Korean Patent No. 10-1338147, even though phase shift modulation (PSM) switching control is applied in a region equal to or greater than a light load by switching of a semiconductor element with a full-bridge circuit, zero voltage switching (ZVS) is not achieved. Also, even though PSM switching control is applied, copper loss and core loss are high due to high peak current flowing in a high frequency transformer and an auxiliary inductor, such that system efficiency decreases.

Document US 2011 249 472 A1 describes a dual active bridge converter and a modulation scheme operating with dual pulse width modulation, single pulse width modulation and phase shift modulation depending on the output load (552) for controlling the dual active bridge converter. An influence of output voltage on the efficiency distribution is likewise shown (Fig 12A, 12B; §58) but not systematically discussed.

### Disclosure

### Technical Problem

Accordingly, the present invention has been made keeping in mind the above problems occurring in the related art, and an object of the present invention is to improve an isolated bidirectional DC-DC converter using switching control interchangeably between PSM switching control and single pulse width modulation (SPWM) switching.

### Technical Solution

The solution is defined by the claims.

### Advantageous Effects

According to the present invention as defined in claim 1, a look-up table is used to choose between single pulse width modulation and phase shift modulation in order to obtain the highest efficiency depending on input voltage, output voltage and load, thereby enhancing overall average efficiency of the system.

### Description of Drawings

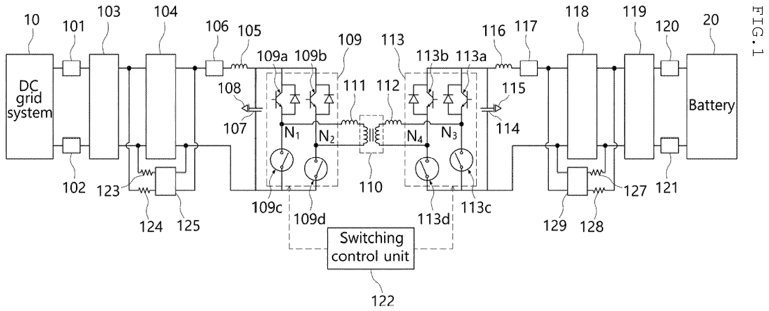

FIG. 1 is a diagram illustrating a configuration of an isolated bidirectional DC-DC converter according to an embodiment of the present invention.

### Mode for Invention

Hereinafter, embodiments of the present invention will be described in detail with reference to the illustrative drawings. It is noted that in assigning reference numerals to elements in the drawings, the same reference numerals designate the same elements throughout the drawings although the elements are shown in different drawings. Also, in describing embodiments of the present invention, the detailed descriptions of known related constitutions or functions thereof may be omitted if they make the gist of the present invention unclear.

Further, when describing the elements of the present invention, terms such as first, second, A, B, (a), (b), etc. may be used. Since these terms are provided merely for the purpose of distinguishing the elements from each other, they do not limit the nature, sequence or order of the elements. When an element is "coupled to", "combined with", or "connected to" another element, it can be directly coupled to the other element or intervening elements may be present therebetween.

FIG. 1 is a diagram illustrating a configuration of an isolated bidirectional DC-DC converter according to an embodiment of the present invention.

Referring to FIG. 1, according to the present invention, the isolated bidirectional DC-DC converter 100 includes a first fuse unit 101, a second fuse unit 102, a first EMC filter unit 103, a first circuit breaking unit 104, a first inductor 105, a first current detecting unit 106, a first capacitor 107, a first voltage detecting unit 108, a first switching unit 109, a transformer 110, a first auxiliary inductor 111, a second auxiliary inductor 112, a second switching unit 113, a second capacitor 114, a second voltage detecting unit 115, a second inductor 116, a second current detecting unit 117, a second circuit breaking unit 118, a second EMC filter unit 119, a third fuse unit 120, and a fourth fuse unit 121. Also, the DC-DC converter 100 may further include a first charging resistor 123, a second charging resistor 124, a first line breaking unit 125, a third charging resistor 126, a fourth charging resistor 127, and a second line breaking unit 128.

When supplying voltage from a DC grid system 10 to a battery 20 or when supplying voltage stored in the battery 20 to the DC grid system 10, the isolated bidirectional DC-DC converter 110 performs bidirectional DC-DC voltage conversion between the DC grid system 10 and the battery 20. Here, while the DC grid system 10 supplies power to loads (not shown) connected thereto, when a large load is connected, the large load is handled receiving energy stored in the battery 20. In contrast, when a light load is connected, the remaining energy is stored in the battery 20. Also, when the remaining charge voltage of the battery 20 drops to a preset reference value or less, the battery 20 is switched to a charging mode and the DC grid system 10 supplies voltage to the battery 20 for charging. Here, in terms of the DC grid system 10, the battery 20 is also a type of load, namely, may be regarded as a load to which the DC grid system 10 supplies voltage. Thus, in the embodiment, during the charging mode of the battery 20, switching of switching units is performed through preset various types of switching control depending on the level of voltage for charging, i.e., the level of the load, thereby enhancing efficiency of the converter.
* The first fuse unit 101 and the second fuse unit 102 are respectively provided on lines connected to a positive (+) terminal and a negative (-) terminal of the DC grid system 10, and open the lines when the current which is equal to or greater than a preset reference current flows in the corresponding lines, i.e. overcurrent. The DC grid system 10 supplies DC voltage to the loads (not shown) connected thereto, or supplies voltage to the battery 20 for charging.

The first EMC filter unit 103 is connected to the DC grid system 10 in parallel to protect the DC-DC converter 100 such that electromagnetic waves or noise signals from peripheral devices do not interfere with the performance of other devices or elements and such that electromagnetic waves or noise signals from peripheral devices are removed, whereby the converter may be protected against impact of electromagnetic waves and the normal performance may be provided.

The first circuit breaking unit 104 is connected to the first EMC filter unit 103 in parallel, and breaks the circuit in the case of a short-circuit or overload to protect devices and lines, whereby fire, accidents, etc. caused by a short-circuit, etc. may be prevented.

The first inductor 105 is connected to the first fuse unit 101 in series, and is used to control the current provided from the DC grid system 10.

The first current detecting unit 106 detects the current flowing in the first inductor 105. The first current detecting unit 106 may use a current transformer (CT) .

The first capacitor 107 is connected to the DC grid system 10 in parallel, and is charged with voltage supplied from the battery 20 or being supplied to the battery 20.

The first voltage detecting unit 108 detects the voltage in the first capacitor 107 charged therewith. The first voltage detecting unit 108 may use a power transformer (PT) .

The first switching unit 109 includes a first switch 109a, a second switch 109b, a third switch 109c, and a fourth switch 109d in the form of full bridge. A contact point at which the first switch 109a is connected to the second switch 109b is connected to a first side of the first capacitor 107, and a contact point at which the third switch 109c is connected to the fourth switch 109d is connected to a second side of the first capacitor 107. The first to fourth switches 109a to 109d may be implemented by MOSFET switches or IGBT switches.

The transformer 110 provides voltage from the primary side to the secondary side or from the secondary side to the primary side. A first side of a primary winding 110a is connected to a contact point (N1) at which the first switch 109a is connected to the third switch 109c, and a second side of the primary winding 110a is connected to a contact point (N2) at which the second switch 109b is connected to the fourth switch 109d.

The first auxiliary inductor 111 is provided with a second side connected to the primary winding 110a of the transformer 110, namely, the first side of the primary winding 110a, and is provided with a first side connected to the contact point N1.

The second auxiliary inductor 112 is connected to a secondary winding 110b of the transformer 110 in series, is provided with a first side connected to a first side of the secondary winding 11b, and is provided with a second side connected to the second switching unit 113.

The second switching unit 113 includes a fifth switch 113a, a sixth switch 113b, a seventh switch 113c, and an eighth switch 113d in the form of full bridge. A contact point (N3) at which the fifth switch 113a is connected to the seventh switch 113c is connected to a second side of the second inductor 112, and a contact point (N4) at which the sixth switch 113b is connected to the eighth switch 113d is connected to a second side of the secondary winding 110b of the transformer 110. The fifth to eighth switches 113a to 113d may be implemented by MOSFET switches or IGBT switches.

The second capacitor 114 is provided with a first side connected to a contact point at which the fifth switch 113a is connected to the sixth switch 113b, and is provided with a second side connected to a contact point at which the seventh switch 113c is connected to the eighth switch 113d.

The second voltage detecting unit 115 detects the voltage stored in the second capacitor 114. The second voltage detecting unit 115 may be, for example, implemented by a power transformer (PT).

The second inductor 116 is provided with a first side connected to a contact point at which the fifth switch 113a is connected to the sixth switch 113b, and is provided with a second side connected to the second circuit breaking unit 118 at the rear end.

The second current detecting unit 117 detects the current flowing in the second inductor 116. The second current detecting unit 117 may be implemented by a current transformer (CT).

The second circuit breaking unit 118 is connected to the second capacitor 115 in parallel, and breaks the circuit in the case of a short-circuit or overload to protect devices and lines, whereby fire, etc. caused by a short-circuit may be prevented.

The second EMC filter unit 119 is connected to the second circuit breaking unit 118 in parallel to protect devices, such that electromagnetic waves or noise signals from various devices, such as the first EMC filter unit 103, do not interfere with the performance of other devices or elements and such that electromagnetic waves or noise signals from other devices are removed, whereby the devices may be protected against impact of electromagnetic waves and the normal performance may be provided.

The third fuse unit 120 and the fourth fuse unit 121 are respectively provided on lines connected to a positive (+) terminal and a negative (-) terminal of the battery 20, and open the lines when the current which is equal to or greater than a preset reference current flows in the corresponding lines, i.e. overcurrent.

The switching control unit 122 controls switching operation of the first to fourth switches 109a to 109d of the first switching unit 109 and the fifth to eighth switches 113a to 113d of the second switching unit 113, individually. Switching control by the switching control unit 122 is interchangeable between PSM switching control and SPWM switching control depending on the type of load, namely, the charging capacity of the battery 20. For example, in the embodiment, preferably, as switching control, SPWM switching control is used for a light load or a heavy load, and PSM switching control is used for a rated load or a high load. In the case of the light load or the heavy load, that is, if the charge voltage which the battery 20 is charged with is relatively low or moderate, PSM switching control results in limitation of a zero voltage switching (ZVS) region and in the high circulating current. Particularly, the above disadvantage becomes worse when an input and an output have a wide range. Thus, it is preferable to use SPWM switching control when a required charging capacity of the battery 20 is relatively small, and to use PSM switching control when it is relatively large. Here, the level of the charging capacity is determined depending on the characteristics of the DC-DC converter, of the DC grid system 10, and of the battery 20, and the value may be set differently. Switching between PSM switching control and SPWM switching control is appropriately performed depending on the type of load, i.e. the required charging capacity of the battery 20, thereby enhancing system efficiency.

Here, whether to use PSM switching control or SPWM switching control is determined depending on the capacity and characteristics of the DC grid system 10 to which the DC-DC converter 100 is applied, of the battery 20, and the characteristics of various devices or elements implemented in the DC-DC converter 100. A simulation is conducted to determine which switching control is efficient depending on the characteristics and the type of load in advance, and the result is stored in an internal memory (not shown). Thereafter, in reality, switching control that is highly efficient is selected depending on the characteristics and the type of load. Depending on the selected switching control as described above, the switching control unit 122 controls operation of the first switching unit 108 and of the second switching unit 113, individually. Particularly, the switching control unit 122 appropriately turns on/off the switches in the first and second switching units 108 and 113 depending on bidirectional power flow of the bidirectional DC-DC converter 100.

The following Table 1 shows system efficiency (unit: %) in an experimental example where the input voltage from the DC grid system 10 to the battery 20 is set to 750 V and the type of load to be charged by the battery 20, namely, the output voltage to the battery 20 through the DC-DC converter 100 is set to 550 V, 600 V, 650 V, and 700 V according to the embodiment of the present invention.

**[Table 1]**

| Input [V] | Output [V] | Switching control | Load capacity [kW] | | | | | | | |
|---|---|---|---|---|---|---|---|---|---|---|
| | | | 5 | 10 | 15 | 20 | 25 | 30 | 35 | 40 |
| 750 | 550 | PSM | 73.0 | 83.6 | 87.8 | 90.2 | 91.9 | 92.2 | 93.5 | 93.2 |
| | | SPWM | 84.4 | 91.2 | 93.5 | 94.8 | 95.5 | 95.7 | 96.2 | 96.3 |
| | 600 | PSM | 79.1 | 87.5 | 91.0 | 92.9 | 94.0 | 94.7 | 94.5 | 94.2 |
| | | SPWM | 88.2 | 93.2 | 95.1 | 95.9 | 96.2 | 96.2 | 96.3 | 96.2 |
| | 650 | PSM | 85.0 | 91.2 | 93.8 | 95.1 | 95.9 | 96.4 | 96.8 | 96.7 |
| | | SPWM | 91.6 | 95.2 | 96.2 | 96.4 | 96.5 | 96.6 | 96.6 | 96.7 |
| | 700 | PSM | 91.8 | 95.1 | 96.3 | 97.2 | 97.1 | 97.0 | 96.9 | 96.9 |
| | | SPWM | 92.8 | 94.9 | 95.8 | 96.4 | 96.7 | 96.8 | 96.8 | 96.9 |

As shown in table 1, for the light load or the heavy load, namely, for 550 V, 600 V, and 650 V, efficiency is excellent with SPWM switching control rather than PSM switching control. Also, for the load above, namely, for 700 V, efficiency is better with PSM switching control.

The efficiency shown in Table 1 is an embodiment, and may vary depending on the input, output, and load capacity. As described above, depending on the characteristic of applied equipment, elements, etc. and on the type of load, between PSM switching control and SPWM switching control, which switching control is excellent in efficiency is checked in advance, and then information related thereto is stored in the internal memory in advance. Thereafter, switching controls are switched depending on the input, output, and load capacity applied in actual operation, thereby enhancing efficiency.

In the meantime, according to another embodiment of the present invention, the isolated bidirectional DC-DC converter 100 may further include: the first charging resistor 123 connected to a positive (+) terminal of the first circuit breaking unit 104 in parallel; the second charging resistor 124 connected to a negative (-) terminal thereof in parallel; and the first line breaking unit 125 connected to the first and second charging resistors 123 and 124 in series. Also, according to still another embodiment of the present invention, the isolated bidirectional DC-DC converter 100 may further include: the third charging resistor 126 connected to a positive (+) terminal of the second circuit breaking unit 118 in parallel; the fourth charging resistor 127 connected to a negative (-) terminal thereof in parallel; and the second line breaking unit 125 connected to the third and fourth charging resistors 126 and 127 in series.

According to the present invention, depending on the type of load connected to the primary side or the secondary side of the transformer 110 in the isolated bidirectional DC-DC converter 100, the switching control unit 122 switches the direction of power flow from the primary side to the secondary side of the transformer 110, or from the secondary side to the primary side, such that switching operation of the first switching unit 109 and the second switching unit 113 is controlled.

Operation of the isolated bidirectional DC-DC converter 100 with the above configuration will be described.

First, when power flow occurs from the primary side to the secondary side of transformer 110, namely, when the DC grid system 10 supplies voltage to the battery 20 for charging, the switching control unit 122 operates the first switching unit 109 such that the voltage converted from the primary side to the secondary side of the transformer 110 is induced. Then, the second capacitor is charged by switching of the second switching unit 113, and power is supplied to the battery 20. Consequently, the battery 20 is charged. Here, depending on the charging capacity of the battery 20, namely, depending on the type of load and on high-efficiency switching control information stored in advance as shown in the example of Table 1, PSM switching control or SPWM switching control is used selectively.

Also, when power flow occurs from the secondary side to the primary side of the transformer 110, namely, when the battery 20 supplies required power to the DC grid system 10, switching operation is performed in the second switching unit 113 and the first switching unit 109 by the switching control unit 122, and the voltage induced from the secondary side to the primary side of the transformer 110 is stored in the first capacitor 107, and then is applied to the DC grid system 10.

In the above description, although a description has been made such that all components constituting embodiments of the present invention are combined into a single component or are operated with the components being combined with each other, the present invention is not limited to those embodiments, but defined by the appended claims.

## Claims

1. An isolated bidirectional DC-DC converter (100) configured to control bidirectional power flow between a DC grid system (10) and a battery (20), the converter comprising:
a first fuse unit (101) provided on a line configured to be connected to a positive (+) terminal of the DC grid system (10);
a second fuse unit (102) provided on a line configured to be connected to a negative (-) terminal of the DC grid system (10);
a first EMC filter unit (103) configured to be connected to the DC grid system (10) in parallel;
a first circuit breaking unit (104) connected to the first EMC filter unit (103) in parallel;
a first inductor (105) connected to the first fuse unit (101) in series;
a first current detecting unit (106) configured to detect a current flowing in the first inductor (105);
a first capacitor (107) configured to be connected to the DC grid system (10) in parallel, the first capacitor (107) configured to be charged with a voltage supplied from the DC grid system (10);
a first voltage detecting unit (108) configured to detect the voltage which the first capacitor (107) is charged with;
a first switching unit (109) including first to fourth switches (109a-109d) in a form of a full bridge in such a manner that a contact point between the first switch (109a) and the second switch (109b) is connected to a first side of the first capacitor (107) and a contact point between the third switch (109c) and the fourth switch (109d) is connected to a second side of the first capacitor (107);
a transformer (110) provided with a first side of a primary winding connected to a contact point between the first switch (109a) and the third switch (109c), and with a second side of the primary winding connected to a contact point between the second switch (109b) and the fourth switch (109d);
a first auxiliary inductor (111) connected to the first side of the primary winding in series;
a second auxiliary inductor (112) connected to a first side of a secondary winding of the transformer (110);
a second switching unit (113) including fifth to eighth switches (113a-113d) in a form of a full bridge in such a manner that a contact point between the fifth switch (113a) and the seventh switch (113c) is connected to a second side of the second auxiliary inductor (112) and a contact point between the sixth switch (113b) and the eighth switch (113d) is connected to a second side of the secondary winding of the transformer (110);
a second capacitor (114) provided with a first side connected to a contact point between the fifth switch (113a) and the sixth switch (113b), and with a second side connected to a contact point between the seventh switch (113c) and the eighth switch (113d);
a second voltage detecting unit (115) configured to detect a voltage stored in the second capacitor (114);
a second inductor (116) provided with a first side connected to the contact point between the fifth switch (113a) and the sixth switch (113b), and with a second side connected to a second circuit breaking unit (118);
a second current detecting unit (117) configured to detect a current flowing in the second inductor;
the second circuit breaking unit (118) connected to the second capacitor (114) in parallel;
a second EMC filter unit (119), of which the input is connected to the second circuit breaking unit (118) in parallel;
a third fuse unit (120) provided on a line of a positive (+) output terminal of the second EMC filter unit (119) and configured to be connected to the battery (20);
a fourth fuse unit (121) provided on a line of a negative (-) output terminal of the second EMC filter unit (119) and configured to be connected to the battery (20);
a memory configured to store system efficiency information related to phase shift modulation (PSM) switching control and single pulse width modulation (SPWM) switching control according to input voltages, output voltages and the required charging capacities of the battery (20) in advance; and
a switching control unit (122) configured to determine one of PSM switching control and SPWM switching control depending on which switching control is more efficient with respect to a current required charging capacity of the battery, a current input voltage and a current output voltage, based on the system efficiency information stored in the memory, and switch the first to eighth switches of the first switching unit (109) and the second switching unit (113), individually, according to the determined switching control.

2. The isolated bidirectional DC-DC converter of claim 1, further comprising:
a first charging resistor (123) connected to a positive (+) terminal of the first circuit breaking unit (104) in parallel;
a second charging resistor (124) connected to a negative (-) terminal of the first circuit breaking unit (104) in parallel;
a first line breaking unit (125) connected to the first and second charging resistors (123, 124) in series;
a third charging resistor (126) connected to a positive (+) terminal of the second circuit breaking unit (118) in parallel;
a fourth charging resistor (127) connected to a negative (-) terminal of the second circuit breaking unit (118) in parallel; and
a second line breaking unit (128) connected to the third and fourth charging resistors (126, 127) in series.

## Patentansprüche

1. Isolierter bidirektionaler DC-DC-Konverter (100), der eingerichtet ist, um einen bidirektionalen Leistungsfluss zwischen einem DC-Netz-System (10) und einer Batterie (20) zu steuern, wobei der Konverter aufweist:
eine erste Sicherung-Einheit (101), welche an einer Leitung bereitgestellt ist, welche eingerichtet ist, um mit einem positiven (+) Anschluss des DC-Netz-Systems (10) verbunden zu sein,
eine zweite Sicherung-Einheit (102), welche an einer Leitung bereitgestellt ist, welche eingerichtet ist, um mit einem negativen (-) Anschluss des DC-Netz-Systems (10) verbunden zu sein,
eine erste EMC-Filter-Einheit (103), welche eingerichtet ist, um parallel zu dem DC-Netz-System (10) angeschlossen zu sein,
eine erste Schaltkreis-Unterbrechen-Einheit (104), welche parallel zu der ersten EMC-Filter-Einheit (103) angeschlossen ist,
einen ersten Induktor (105), welcher in Reihe mit der ersten Sicherung-Einheit (101) geschaltet ist,
eine erste Strom-Detektieren-Einheit (106), welche eingerichtet ist, um einen Strom zu detektieren, welcher in dem ersten Induktor (105) fließt,
einen ersten Kondensator (107), welcher eingerichtet ist, um parallel zu dem DC-Netz-System (10) angeschlossen zu sein, wobei der erste Kondensator (107) eingerichtet ist, um mit einer von dem DC-Netz-System (10) zugeführten Spannung aufgeladen zu werden,
eine erste Spannung-Detektieren-Einheit (108), welche eingerichtet ist, um die Spannung zu detektieren, mit welcher der erste Kondensator (107) aufgeladen wird,
eine erste Schalten-Einheit (109), welche einen ersten bis einen vierten Schalter (109a-109d) in einer Form einer Vollbrücke in einer solchen Weise aufweist, dass ein Kontaktpunkt zwischen dem ersten Schalter (109a) und dem zweiten Schalter (109b) mit einer ersten Seite des ersten Kondensators (107) verbunden ist und ein Kontaktpunkt zwischen dem dritten Schalter (109c) und dem vierten Schalter (109d) mit einer zweiten Seite des ersten Kondensators (107) verbunden ist,
einen Transformator (110), welcher mit einer ersten Seite einer Primärwindung, welche mit einem Kontaktpunkt zwischen dem ersten Schalter (109a) und dem dritten Schalter (109c) verbunden ist, und mit einer zweiten Seite der Primärwindung, welche mit einem Kontaktpunkt zwischen dem zweiten Schalter (109b) und dem vierten Schalter (109d) verbunden ist, versehen ist,
einen ersten Hilfsinduktor (111), welcher in Reihe mit der ersten Seite der Primärwindung geschaltet ist,
einen zweiten Hilfsinduktor (112), welcher mit einer ersten Seite einer Sekundärwindung des Transformators (110) verbunden ist,
eine zweite Schalten-Einheit (113), welche einen fünften bis einen achten Schalter (113a-113d) in einer Form einer Vollbrücke in einer solchen Weise aufweist, dass ein Kontaktpunkt zwischen dem fünften Schalter (113a) und dem siebten Schalter (113c) mit einer zweiten Seite des zweiten Hilfsinduktors (112) verbunden ist und ein Kontaktpunkt zwischen dem sechsten Schalter (113b) und dem achten Schalter (113d) mit einer zweiten Seite der Sekundärwindung des Transformators (110) verbunden ist,
einen zweiten Kondensator (114), welcher mit einer ersten Seite, welche mit einem Kontaktpunkt zwischen dem fünften Schalter (113a) und dem sechsten Schalter (113b) verbunden ist, und mit einer zweiten Seite, welche mit einem Kontaktpunkt zwischen dem siebten Schalter (113c) und dem achten Schalter (113d) verbunden ist, versehen ist,
eine zweite Spannung-Detektieren-Einheit (115), welche eingerichtet ist, um eine in dem zweiten Kondensator (114) gespeicherte Spannung zu detektieren,
einen zweiten Induktor (116), welcher mit einer ersten Seite, welche mit dem Kontaktpunkt zwischen dem fünften Schalter (113a) und dem sechsten Schalter (113b) verbunden ist, und mit einer zweiten Seite, welche mit einer zweiten Schaltkreis-Unterbrechen-Einheit (118) verbunden ist, versehen ist,
eine zweite Strom-Detektieren-Einheit (117), welche eingerichtet ist, um einen in dem zweiten Induktor fließenden Strom zu detektieren,
die zweite Schaltkreis-Unterbrechen-Einheit (118), welche parallel zu dem zweiten Kondensator (114) geschaltet ist,
eine zweite EMC-Filter-Einheit (119), deren Eingang parallel zur zweiten Schaltkreis-Unterbrechen-Einheit (118) geschaltet ist,
eine dritte Sicherung-Einheit (120), welche an einer Leitung eines positiven (+) Ausgang-Anschlusses der zweiten EMC-Filter-Einheit (119) bereitgestellt ist und welche eingerichtet ist, um mit der Batterie (20) verbunden zu sein,
eine vierte Sicherung-Einheit (121), welche an einer Leitung eines negativen (-) Ausgang-Anschlusses der zweiten EMC-Filter-Einheit (119) bereitgestellt ist und welche eingerichtet ist, um mit der Batterie (20) verbunden zu sein,
einen Speicher, welcher eingerichtet ist, um System-Effizienz-Informationen, welche einen Phasenverschiebung-Modulation(PSM)-Schalten-Steuerung und eine Einzel-Puls-Weitenmodulation(SPWM)-Schalten-Steuerung betreffen, gemäß Eingangsspannungen, Ausgangsspannungen und den erforderlichen Auflade-Kapazitäten der Batterie (20) vorab zu speichern, und
eine Schalten-Steuerung-Einheit (122), welche eingerichtet ist, um eine von PSM-Schalten-Steuerung und SPWM-Schalten-Steuerung in Abhängigkeit davon, welche Schalten-Steuerung in Bezug auf eine gegenwärtig erforderliche Auflade-Kapazität der Batterie, eine gegenwärtige Eingang-Spannung und eine gegenwärtige Ausgang-Spannung effizienter ist, basierend auf den im Speicher gespeicherten System-Effizienz-Informationen zu ermitteln, und den ersten bis den achten Schalter der ersten Schalten-Einheit (109) und der zweiten Schalten-Einheit (113) gemäß der ermittelten Schalten-Steuerung individuell zu schalten.

2. Isolierter bidirektionaler DC-DC-Konverter gemäß Anspruch 1, welcher ferner aufweist:
einen ersten Aufladen-Widerstand (123), welcher parallel zu einem positiven (+) Anschluss der ersten Schaltkreis-Unterbrechen-Einheit (104) geschaltet ist,
einen zweiten Aufladen-Widerstand (124), welcher parallel zu einem negativen (-) Anschluss der ersten Schaltkreis-Unterbrechen-Einheit (104) geschaltet ist,
eine erste Leitung-Unterbrechen-Einheit (125), welche in Reihe zu dem ersten und dem zweiten Aufladen-Widerstand (123, 124) geschaltet ist,
einen dritten Aufladen-Widerstand (126), welcher parallel zu einem positiven (+) Anschluss der zweiten Schaltkreis-Unterbrechen-Einheit (118) geschaltet ist,
einen vierten Aufladen-Widerstand (127), welcher parallel zu einem negativen (-) Anschluss der zweiten Schaltkreis-Unterbrechen-Einheit (118) geschaltet ist, und
eine zweite Leitung-Unterbrechen-Einheit (128), welche in Reihe zu dem dritten und dem vierten Aufladen-Widerstand (126, 127) geschaltet ist.

## Revendications

1. Convertisseur DC-DC bidirectionnel isolé (100) configuré pour commander un flux de puissance bidirectionnel entre un système de réseau DC (10) et une batterie (20), le convertisseur comprenant :
une première unité de fusible (101) ménagée sur une ligne configurée pour être connectée à une borne positive (+) du système de réseau DC (10) ;
une deuxième unité de fusible (102) prévue sur une ligne configurée pour être connectée à une borne négative (-) du système de réseau DC (10) ;
une première unité de filtre EMC (103) configurée pour être connectée au système de réseau DC (10) en parallèle ;
une première unité de coupure de circuit (104) connectée à la première unité de filtre EMC (103) en parallèle ;
un premier inducteur (105) connecté en série à la première unité de fusible (101) ;
une première unité de détection de courant (106) configurée pour détecter un courant qui circule dans le premier inducteur (105) ;
un premier condensateur (107) configuré pour être connecté au système de réseau DC (10) en parallèle, le premier condensateur (107) étant configuré pour être chargé avec une tension fournie par le système de réseau DC (10) ;
une première unité de détection de tension (108) configurée pour détecter la tension à laquelle le premier condensateur (107) est chargé ;
une première unité de commutation (109) incluant des premier à quatrième commutateurs (109a-109d) sous la forme d'un pont complet de telle manière qu'un point de contact entre le premier commutateur (109a) et le deuxième commutateur (109b) est connecté à un premier côté du premier condensateur (107) et un point de contact entre le troisième commutateur (109c) et le quatrième commutateur (109d) est connecté à un second côté du premier condensateur (107) ;
un transformateur (110) muni d'un premier côté d'un enroulement primaire connecté à un point de contact entre le premier commutateur (109a) et le troisième commutateur (109c), et d'un second côté de l'enroulement primaire connecté à un point de contact entre le deuxième commutateur (109b) et le quatrième commutateur (109d) ;
un premier inducteur auxiliaire (111) connecté en série au premier côté de l'enroulement primaire ;
un deuxième inducteur auxiliaire (112) connecté à un premier côté d'un enroulement secondaire du transformateur (110) ;
une seconde unité de commutation (113) incluant des cinquième à huitième commutateurs (113a-113d) sous la forme d'un pont complet de telle manière qu'un point de contact entre le cinquième commutateur (113a) et le septième commutateur (113c) est connecté à un second côté du second inducteur auxiliaire (112) et un point de contact entre le sixième commutateur (113b) et le huitième commutateur (113d) est connecté à un second côté de l'enroulement secondaire du transformateur (110) ;
un second condensateur (114) pourvu d'un premier côté connecté à un point de contact entre le cinquième commutateur (113a) et le sixième commutateur (113b), et d'un second côté connecté à un point de contact entre le septième commutateur (113c) et le huitième commutateur (113d) ;
une seconde unité de détection de tension (115) configurée pour détecter une tension stockée dans le second condensateur (114) ;
un second inducteur (116) pourvu d'un premier côté connecté au point de contact entre le cinquième commutateur (113a) et le sixième commutateur (113b), et d'un second côté connecté à une seconde unité de coupure de circuit (118) ;
une seconde unité de détection de courant (117) configurée pour détecter un courant circulant dans le second inducteur ;
la seconde unité de coupure de circuit (118) connectée au second condensateur (114) en parallèle ;
une seconde unité de filtre EMC (119), dont l'entrée est connectée en parallèle à la seconde unité de coupure de circuit (118) ;
une troisième unité de fusible (120) ménagée sur une ligne d'une borne de sortie positive (+) de la seconde unité de filtre EMC (119) et configurée pour être connectée à la batterie (20) ;
une quatrième unité de fusible (121) ménagée sur une ligne d'une borne de sortie négative (-) de la seconde unité de filtre EMC (119) et configurée pour être connectée à la batterie (20) ;
une mémoire configurée pour stocker des informations sur l'efficacité du système liées à la commande de commutation à modulation par déplacement de phase (PSM) et à la commande de commutation à modulation de largeur d'impulsion unique (SPWM) en fonction des tensions d'entrée, des tensions de sortie et des capacités de charge requises de la batterie (20) par avance ; et
une unité de commande de commutation (122) configurée pour déterminer une commande de commutation parmi une commande de commutation PSM et une commande de commutation SPWM en fonction de quelle commande de commutation est plus efficace par rapport à une capacité de charge requise de la batterie actuelle, une tension d'entrée actuelle et une tension de sortie actuelle, sur la base des informations sur l'efficacité du système stockées dans la mémoire, et commuter les premier à huitième commutateurs de la première unité de commutation (109) et de la seconde unité de commutation (113), individuellement, selon la commande de commutation déterminée.

2. Convertisseur DC-DC bidirectionnel isolé selon la revendication 1, comprenant en outre :
une première résistance de charge (123) connectée à une borne positive (+) de la première unité de coupure de circuit (104) en parallèle ;
une deuxième résistance de charge (124) connectée à une borne négative (-) de la première unité de coupure de circuit (104) en parallèle ;
une première unité de rupture de ligne (125) connectée aux première et deuxième résistances de charge (123, 124) en série ;
une troisième résistance de charge (126) connectée à une borne positive (+) de la seconde unité de coupure de circuit (118) en parallèle ;
une quatrième résistance de charge (127) connectée à une borne négative (-) de la seconde unité de coupure de circuit (118) en parallèle ; et
une seconde unité de rupture de ligne (128) connectée aux troisième et quatrième résistances de charge (126, 127) en série.
